# FASCICULE DE BREVET EUROPEEN

(11) **EP 4 025 399 B1**
(45) Date de publication et mention de la délivrance du brevet: **01.01.2025**
(21) Numéro de dépôt: 20786009.9
(22) Date de dépôt: 03.09.2020
(51) Int. Cl.: B26D 5/00, B26F 1/38, B32B 38/00

(54) **PROCEDE ET MACHINE DE DECOUPE D'ELEMENTS DE DRAPAGE**
VERFAHREN UND MASCHINE ZUM SCHNEIDEN VON STOFFELEMENTEN
METHOD AND MACHINE FOR CUTTING DRAPERY ELEMENTS

(30) Priorité: 06.09.2019 FR 1909810
(43) Date de publication de la demande: 13.07.2022
(73) Titulaire: Safran Nacelles, 76700 Gonfreville-l'Orcher (FR)
(72) Inventeur: HAUCOURT, Boris, 77550 MOISSY-CRAMAYEL (FR); BOISTELLE, Hugo, 77550 MOISSY-CRAMAYEL (FR); PERSYN, Benjamin, 77550 MOISSY-CRAMAYEL (FR); PILLON, Eric, 77550 MOISSY-CRAMAYEL (FR); LABAT, Yanhael, 77550 MOISSY-CRAMAYEL (FR)
(74) Mandataire: Cabinet Beau de Loménie
(86) Numéro de dépôt international: PCT/FR2020/051529
(87) Numéro de publication internationale: WO 2021/044103

(56) Documents cités:
- DE-A1- 10 144 487
- DE-U1- 29 604 938
- FR-A1- 2 193 109
- FR-A1- 2 484 897
- US-A1- 2015 118 449

## Description

### Domaine Technique

La présente invention concerne la fabrication de pièces en matériau composite comprenant un renfort fibreux formé par drapage de plis fibreux sur un moule et densifié par une matrice.

### Technique antérieure

Une pièce en matériau composite obtenue par drapage consiste en un empilage de plis découpés dans une texture fibreuse généralement sous forme de bande. La texture est constituée de fibres, par exemple de fibres de carbone, de verre ou de kevlar, parallèles entre elles ou tissées, et pré-imprégnées de résine. La ou les faces collantes de la texture pré-imprégnée sont recouvertes d'un film séparateur.

Chaque pli de la pièce est défini par un contour géométrique et une orientation des fibres du matériau dans la surface définie par ce contour. Un pli peut être réalisé d'un seul tenant, mais il est plus généralement constitué d'une juxtaposition de découpes réalisées dans une bande textile pré-imprégnée.

De manière générale, un procédé de réalisation d'une pièce drapée comprend les opérations suivantes : définition des découpes de chaque pli de la pièce, réalisation de ces découpes dans une texture fibreuse pré-imprégnée, réalisation de la pièce par empilage des plis, puis compactage. La dernière opération est la cuisson de la pièce drapée compactée pour polymériser la résine. Il est courant de réaliser les découpes au moyen d'une machine de découpe équipée d'un poste de commande numérique. Ceci permet, par rapport à la technique artisanale, d'obtenir des découpes de géométrie parfaite et de manière plus rapide. Ces machines, performantes, peuvent découper simultanément plusieurs plis et permettent en général de réaliser un placement optimisé des différentes découpes.

Si la technique de fabrication par drapage permet d'obtenir des pièces en matériau composite présentant de très bonnes propriétés mécaniques, il existe toutefois un risque significatif d'avoir des corps étrangers présents dans l'empilement de plis. Ces corps étrangers peuvent être source de délaminage dans la pièce finale, ce qui n'est pas acceptable pour la tenue mécanique de la pièce. Le drapage des plis est pourtant réalisé en salle blanche afin de réduire au maximum les sources de contaminations. Par conséquent, le ou les corps étrangers présents dans l'empilement sont nécessairement issus d'une partie de matière présente en salle blanche. Il a été constaté que la matière du film séparateur constituait la majorité des corps étrangers retrouvés dans les empilements de plis contaminés.

Le document DE 296 04 938 U1 constitue la base des préambules des deux revendications indépendantes.

### Exposé de l'invention

La présente invention a pour but de remédier aux inconvénients précités et de proposer une solution qui permet de minimiser, voire d'éliminer, la présence de corps étrangers dans les plis utilisés pour le drapage.

A cet effet, l'invention propose un procédé de découpe d'un ou plusieurs éléments de drapage dans une bande de matériau comprenant une couche de tissu comportant sur au moins une face un film, chaque élément de drapage étant délimité suivant un contour déterminé comprenant au moins un angle, chaque élément de drapage étant découpé à l'aide d'une lame de découpe, caractérisé en ce que, à chaque angle du contour, la couche de tissu et le ou les films sont découpés suivant un arrondi de manière à obtenir un ou plusieurs éléments de drapage sans sur-découpe.

Comme expliqué ci-après en détails, les inventeurs ont constaté après étude que la plupart des corps étrangers présent dans l'empilement de plis provenaient de morceaux de film(s) issus de déchirures du ou des films lors de leur décollement de l'élément de drapage. Les inventeurs ont également déterminé que les sur-découpes présentes dans le ou les films présents sur la couche de tissu constituaient des amorces de déchirures.

Par conséquent, selon le procédé de l'invention, chaque angle ou changement brusque de trajectoire dans le contour d'un élément de drapage est découpé suivant un arrondi afin de permettre un changement de direction progressif de la lame de découpe et d'éviter ainsi son arrêt pour la soulever, l'orienter dans la nouvelle direction et la réintroduire dans la couche de tissu comme dans l'art antérieur. La trajectoire de découpe étant continue, il n'y a plus de traits de sur-découpes présents dans le ou les films en contact avec la couche de tissu. Les risques de déchirures du ou des films sont alors grandement réduits. En outre, le procédé de découpe de l'invention permet un gain de temps par rapport au procédé de découpe de l'art antérieur. En effet, avec le procédé de l'invention, la découpe des éléments de drapage peut être réalisée en continu, en particulier au niveau de chaque angle ou changement brusque de direction dans la découpe. Cela permet d'économiser le temps passé précédemment pour soulever, repositionner et réintroduire la lame à chaque changement de direction.

Selon une caractéristique particulière du procédé de l'invention, chaque arrondi présente un rayon de courbure supérieur ou égal à 1,2 mm, ce qui permet de faciliter la découpe en continu (pas d'arrêt de la découpe pour soulever la lame) de chaque arrondi sans former d'arrêtes ni de plissures dans le film.

Selon une autre caractéristique particulière du procédé de l'invention, chaque arrondi présente un rayon de courbure inférieur ou égal à 3 mm, ce qui permet de rester au plus près du contour de découpe afin de ne pas générer d'abattements mécaniques par manque de matière dans l'empilement et de ne pas générer de problème de santé matière par décollement entre un support (ex. nid d'abeille) et une peau composite qui aurait un creux dans la zone d'accostage avec le support.

Selon une autre caractéristique particulière du procédé de l'invention, la couche de tissu est une couche de fibres pré-imprégnées d'une résine comprenant sur au moins une face un film séparateur.

L'invention concerne encore une machine de découpe d'éléments de drapage comprenant un dispositif d'alimentation d'une bande de matériau comprenant une couche de tissu et au moins un film présent sur une de ses faces, un système de découpe comprenant une lame de découpe montée sur un mécanisme motorisé apte à déplacer la lame de découpe suivant plusieurs directions dans la bande de matériau et une unité de commande reliée au mécanisme motorisé de manière à commander les déplacements de la lame de découpe dans la bande de matériau suivant un contour de découpe déterminé comprenant au moins un angle, caractérisée en ce que l'unité de commande est configurée pour commander la découpe de la bande de matériau suivant un arrondi à chaque angle du contour de manière à obtenir un élément de drapage sans sur-découpe.

Selon une caractéristique particulière de la machine de l'invention, chaque arrondi présente un rayon de courbure supérieur ou égal à 1,2 mm.

Selon une autre caractéristique particulière de la machine de l'invention, chaque arrondi présente un rayon de courbure inférieur ou égal à 3 mm.

Selon une autre caractéristique particulière de la machine de l'invention, la couche de tissu est une couche de fibres pré-imprégnée d'une résine comprenant sur au moins une face un film séparateur.

### Brève description des dessins

[Fig. 1] La figure 1 est une vue schématique de dessus montrant deux éléments de drapage découpés dans une bande de matériau selon l'art antérieur,
[Fig. 2] La figure 2 est une vue schématique en coupe montrant la découpe d'un élément de drapage de la figure 1,
[Fig. 3] La figure 3 est une vue schématique en perspective montrant le retrait d'un film d'un élément de drapage de la figure 1,
[Fig. 4] La figure 4 est une vue schématique de dessus montrant un élément de drapage découpés dans une bande de matériau conformément à un mode de réalisation de l'invention,
[Fig. 5] La figure 5 est une vue schématique en perspective d'une machine de découpe conformément à un mode de réalisation de l'invention.

### Description des modes de réalisation

L'invention s'applique d'une manière générale à la découpe de plis ou strates dans une bande de matériau comprenant une couche de tissu sèche ou pré-imprégnée et comportant sur au moins une de ces faces un film qui est découpé en même temps que la couche de tissu. L'invention trouve une application particulière dans la fabrication de pièces en matériau composite par drapage de plis fibreux pré-imprégnés d'une résine précurseur d'une matrice.

Les plis utilisés dans la réalisation d'une pièce en matériau composite par drapage sont préalablement découpés dans une couche de tissu généralement pré-imprégnée et se présentant sous forme d'une bande recouverte sur une face ou les deux d'un film séparateur évitant un contact direct avec la couche qui présente un caractère collant ou poisseux en raison de son imprégnation avec une résine. Au moment du drapage des plis sur un moule de drapage, un opérateur décolle la ou les portions de film présentes sur la ou les faces de l'élément de drapage.

Les inventeurs ont constaté que la matière du ou des films séparateurs présents sur la ou les faces de la couche de tissu dans laquelle sont découpés les éléments de drapage constitue la majorité des corps étrangers retrouvés dans des empilements de plis après drapage de ceux-ci. Les éléments de drapage sont constitués d'une portion de la couche de tissu avec une portion de film sur une face ou les deux.

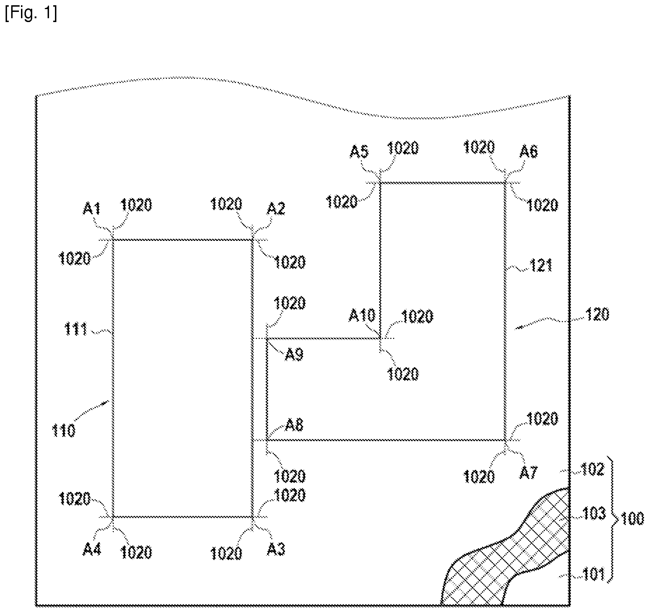

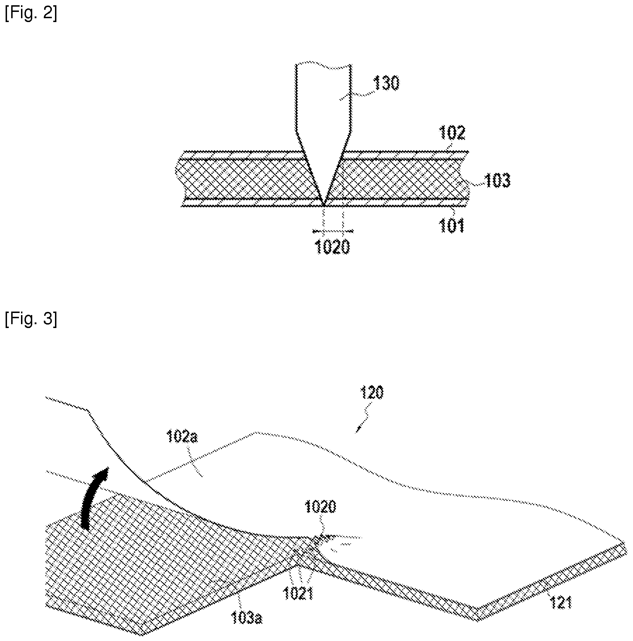

Les inventeurs ont alors étudié les différentes étapes de fabrication afin d'identifier l'origine de l'apparition de ces morceaux de film dans l'empilement de plis. Les inventeurs ont constaté que la découpe des éléments de drapage selon l'art antérieur entraînait des sur-découpes qui peuvent former des amorces de déchirure du film lors de son retrait (décollement) par un opérateur avant le drapage du pli. La découpe selon l'art antérieur est réalisée avec une lame de découpe motorisée qui, à chaque changement brusque de trajectoire, est soulevée, orientée dans la nouvelle direction de découpe et réintroduite dans la couche à découper. La figure 1 illustre une bande de matériau 100 constituée d'une couche de tissu 103 comprenant sur sa face inférieure un premier film 101 et sur sa face supérieure un deuxième film 102. Deux éléments de drapage 110 et 120 ont été découpés dans la bande 100 selon la technique de découpe de l'art antérieur décrite ci-avant au moyen d'une lame de découpe 130 (figure 2). L'élément de drapage 110 a été découpé suivant un contour 111 comprenant quatre angles A1 à A4 ou changements brusques de direction. De même, l'élément de drapage 120 a été découpé suivant un contour 121 comprenant six angles A5 à A10 ou changements brusques de direction. Comme indiqué ci-avant, à chacun de ces angles, la lame de découpe a été soulevée, orientée dans la nouvelle direction de découpe et réintroduite dans la bande de matériau 100.

La forme triangulaire de la lame de découpe 130 (figure 2) ainsi que les tolérances de positionnement définies au niveau de chaque angle afin d'assurer la découpe complète de chaque élément de drapage génèrent des sur-découpes de quelques millimètres dans les films 101 et 102 au niveau des angles du contour de découpe. Sur la figure 1, seules des sur-découpes1 020 présentes dans le deuxième film 102 sont représentées. Les sur-découpes 1020 présentes dans le deuxième film 102 sont essentiellement générées par la forme triangulaire de la lame de découpe et, dans une moindre mesure, par les tolérances de positionnement de la lame tandis que les sur-découpes présentes dans le premier film 101 (non représentées sur les figures 1 et 2) sont générées par les tolérances de positionnement de la lame de découpe.

A chaque angle, deux sur-découpes sont présentes dans chaque film, une première sur-découpe correspondant à une sur-longueur de découpe lorsque la lame atteint un angle du contour de découpe et une deuxième sur-découpe correspondant à une sur longueur de découpe lorsque la lame est réintroduite dans la bande de matériau 100 après avoir été soulevée et réorientée. On assure ainsi une découpe complète de l'élément de drapage dans la bande 100 à chaque angle ou changement brusque de direction de découpe.

Les sur-découpes dans le ou les films présents sur une face ou les deux faces de la couche de tissu sont des potentielles amorces de déchirures des films lors de leur décollement de la portion de tissu découpée pour former un élément de drapage. Comme illustré sur la figure 3, lors du retrait (décollement) par un opérateur de la portion de film 102a présente sur la partie supérieure de l'élément de drapage 120, des déchirures se produisent au niveau de sur-découpes 1020, ce qui entraîne le dépôt de morceaux de film 1021 sur la portion de tissu 103a de tissu présente dans l'élément de drapage 120. Tout ou partie des morceaux de film 1021 peuvent alors se retrouver dans la pièce finale après drapage de la portion de tissu 103a.

En outre, lorsque deux éléments de drapage sont découpés dans la bande de matériau à des endroits proches, ce qui est souvent le cas pour optimiser l'utilisation de matière, les sur-découpes d'un élément de drapage peuvent se propager dans l'élément de drapage adjacent et créer dans celui-ci des amorces de déchirures supplémentaires.

Après avoir identifié la cause de la présence de morceaux de film dans les plis drapés, les inventeurs ont développé un nouveau procédé de découpe afin de permettre un retrait du ou des films présents sur les éléments de drapage sans risque de déchirure.

Le procédé de découpe de l'invention permet d'obtenir des éléments de drapage dépourvus de sur-découpes. A cet effet, selon le procédé de découpe de l'invention, chaque angle ou changement brusque de trajectoire dans le contour d'un élément de drapage est découpé suivant un arrondi afin de permettre un changement de direction progressif de la lame de découpe et d'éviter ainsi son arrêt pour la soulever, l'orienter dans la nouvelle direction et la réintroduire dans la couche de tissu comme dans l'art antérieur. La trajectoire de découpe étant continue, il n'y a plus de traits de sur-découpes présents dans le ou les films en contact avec la couche de tissu. Les risques de déchirures du ou des films sont grandement réduits. Un autre avantage du procédé de découpe de l'invention concerne le gain de temps par rapport au procédé de découpe de l'art antérieur. En effet, avec le procédé de l'invention, la découpe des éléments de drapage peut être réalisée en continu, en particulier au niveau de chaque angle ou changement brusque de direction dans la découpe. Cela permet d'économiser le temps passé précédemment pour soulever, repositionner et réintroduire la lame à chaque changement de direction.

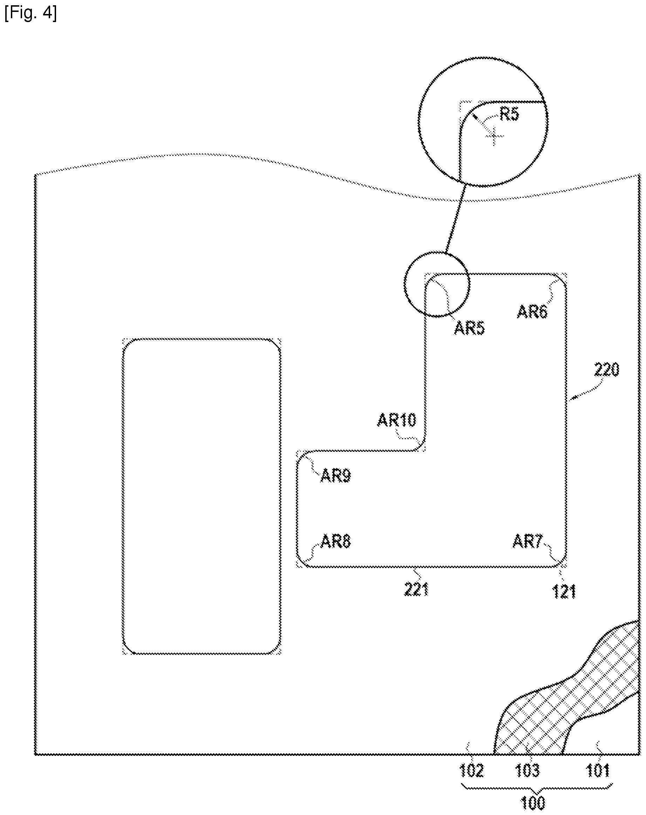

La figure 4 illustre la découpe d'un élément de drapage 220 ayant une forme similaire à l'élément de drapage 120 en ce que son contour 221 définissant la trajectoire de découpe correspond globalement au contour 121 de l'élément de drapage 120. Toutefois, conformément à l'invention, les portions du contour 221 présentes au niveau des angles A5 et A10 du contour 121 (figure 1) comprennent respectivement des arrondis AR5 à AR10. Ainsi, en suivant les arrondis AR5 à AR10, la lame peut découper entièrement l'élément de drapage 220 de manière continue, c'est-à-dire sans interruption de coupe durant les changements de direction même brusques, ce qui permet d'obtenir un élément de drapage 220 sans aucune sur-découpe.

Chaque arrondi est découpé suivant un rayon de courbure déterminé comme le rayon de courbure R5 de l'arrondi AR5 illustré sur la figure 4. Le rayon de courbure de chaque arrondi est de préférence supérieur ou égal à 1,2 mm afin de faciliter la découpe en continu (pas d'arrêt de la découpe pour soulever la lame) de chaque arrondi sans former d'arrêtes ni de plissures dans le film. En outre, le rayon de chaque arrondi est de préférence inférieur ou égal à 3 mm afin de rester au plus près du contour de découpe et ne pas générer ainsi d'abattements mécaniques par manque de matière dans l'empilement. En outre, cela permet de ne pas générer de problème de santé matière par décollement entre un support, comme par exemple un nid d'abeille, et une peau composite qui aurait un creux dans la zone d'accostage avec le support.

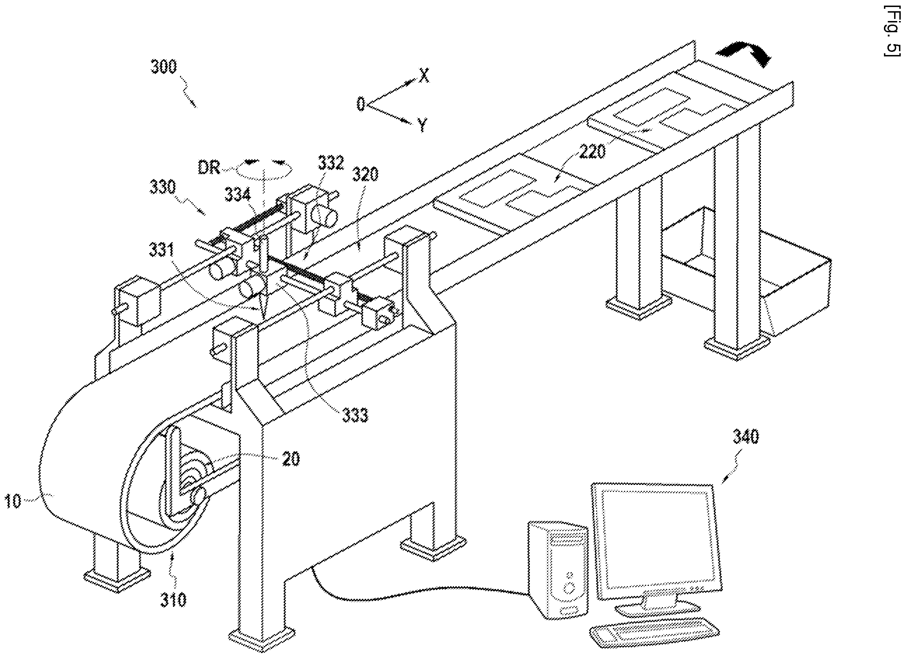

La figure 5 illustre une machine de découpe 300 à commande numérique dans laquelle le procédé de l'invention est mis en oeuvre. De manière connue, la machine de découpe 300 comprend un dispositif d'alimentation 310 comprenant une bande de matériau 10 stockée sur un rouleau 20, la bande de matériau étant ici constituée d'une couche de tissu pré-imprégné d'une résine et de deux films séparateurs présents respectivement sur une des faces de la couche (non représentés sur la figure 5). La machine de découpe 300 comprend également une table de découpe 320 présente en aval du dispositif d'alimentation 310 et un système de découpe 330 comprenant une lame de découpe 331 montée sur un mécanisme motorisé 332 configuré pour déplacer la lame de découpe suivant plusieurs directions. Plus précisément, le mécanisme motorisé 332 comprend un chariot 333 permettant de déplacer la lame 331 suivant une trajectoire définie dans un repère (0 ; x ; y), la lame de découpe 331 étant en outre montée sur le chariot 333 via un axe 334 permettant d'orienter la lame suivant une double direction DR afin de faciliter la découpe des arrondis. La machine à découper 300 comprend encore une unité de commande 340 reliée au mécanisme motorisé 332 et configurée pour commander les déplacements de la lame suivant un contour de découpe déterminée. A cet effet, l'unité de commande 340 est programmée à partir de modèles générés par exemple au moyen d'un logiciel de conception et fabrication assistées par ordinateur (CFAO), les modèles définissant chacun un contour de découpe d'un élément de drapage dans une bande de matériau dans lequel chaque angle est découpé suivant un arrondi conformément à la présente invention. La machine de découpe 300 est par exemple apte à découper l'élément de drapage 220 suivant le contour 221 comprenant les arrondis AR5 à AR10. Selon une variante, l'unité de commande peut être programmée pour corriger les angles vifs ou similaires présents dans une trajectoire de découpe initiale en angle arrondis au moment de la découpe.

## Revendications

1. Procédé de découpe d'un ou plusieurs éléments de
drapage (220) dans une bande de matériau (100) comprenant une couche de tissu (103) comportant sur au moins une face un film (101, 102), chaque élément de drapage étant délimité suivant un contour déterminé (221) comprenant au moins un angle, chaque élément de drapage étant découpé à l'aide d'une lame de découpe (331),
**caractérisé en ce que**, à chaque angle du contour, la couche de tissu (103) et ledit au moins un film (101, 102) sont découpés suivant un arrondi (AR5-AR10) de manière à obtenir un ou plusieurs éléments de drapage (220) sans sur-découpe, les sur-découpes étant de potentielles amorces de déchirures dudit au moins un film lors de son décollement de la couche de tissu, les déchirures entraînant le dépôt de morceaux de film sur la couche de tissu présente dans le ou les éléments de drapage.

2. Procédé selon la revendication 1, dans lequel chaque arrondi (A5) présente un rayon de courbure (R5) supérieur ou égal à 1,2 mm.

3. Procédé selon la revendication 1 ou 2, dans lequel chaque arrondi (A5) présente un rayon de courbure (R5) inférieur ou égal à 3 mm.

4. Procédé selon l'une quelconque des revendications 1 à 3, dans lequel la couche de tissu (103) est une couche de fibres pré-imprégnée d'une résine comprenant sur au moins une face un film séparateur.

5. Machine de découpe d'éléments de drapage (300) comprenant un dispositif d'alimentation (310) d'une bande de matériau (100) comprenant une couche de tissu (103) et au moins un film (101, 102) présent sur une de ses faces, un système de découpe (330) comprenant une lame de découpe (331) montée sur un mécanisme motorisé (332) apte à déplacer la lame de découpe suivant plusieurs directions dans la bande de matériau et une unité de commande (340) reliée au mécanisme motorisé de manière à commander les déplacements de la lame de découpe dans la bande de matériau (100) suivant un contour de découpe déterminé (221) comprenant au moins un angle, **caractérisée en ce que** l'unité de commande (340) est configurée pour commander la découpe de la bande de matériau (10) suivant un arrondi (ARS-Ar10) à chaque angle du contour de manière à obtenir un élément de drapage (220) sans sur-découpe, les sur-découpes étant de potentielles amorces de déchirures dudit au moins un film lors de son décollement de la couche de tissu, les déchirures entraînant le dépôt de morceaux de film sur la couche de tissu présente dans l'élément de drapage.

6. Machine selon la revendication 5, dans laquelle chaque arrondi (AR5) présente un rayon de courbure (R5) supérieur ou égal à 1,2 mm.

7. Machine selon la revendication 5 ou 6, dans laquelle chaque arrondi (AR5) présente un rayon de courbure (R5) inférieur ou égal à 3 mm.

8. Machine selon l'une quelconque des revendications 5 à 7, dans lequel la couche de tissu (103) est une couche de fibres pré-imprégnée d'une résine comprenant sur au moins une face un film séparateur.

## Patentansprüche

1. Verfahren zum Schneiden von einem oder mehreren Stoffelementen (220) aus einem Materialstreifen (100), der eine Gewebeschicht (103) umfasst, die auf mindestens einer Seite eine Folie (101, 102) beinhaltet, wobei jedes Stoffelement gemäß einer bestimmten Kontur (221) begrenzt ist, die mindestens einen Winkel umfasst, wobei jedes Stoffelement mit Hilfe einer Schneidklinge (331) geschnitten wird, **dadurch gekennzeichnet, dass** in jedem Winkel der Kontur die Gewebeschicht (103) und die mindestens eine Folie (101, 102) gemäß einer Rundung (AR5-AR10) geschnitten werden, um ein oder mehrere Stoffelemente (220) ohne Überschneidung zu erhalten, wobei die Überschneidungen potentielle Ansätze von Rissen der mindestens einen Folie beim Abziehen von der Gewebeschicht sind, wobei die Risse die Ablagerung von Folienstücken auf der Gewebeschicht, die in dem oder den Stoffelementen vorhanden ist, mit sich führen.

2. Verfahren nach Anspruch 1, wobei jede Rundung (A5) einen Krümmungsradius (R5) größer oder gleich 1,2 mm aufweist.

3. Verfahren nach Anspruch 1 oder 2, wobei jede Rundung (A5) einen Krümmungsradius (R5) kleiner oder gleich 3 mm aufweist.

4. Verfahren nach einem der Ansprüche 1 bis 3, wobei die Gewebeschicht (103) eine Faserschicht ist, die mit einem Harz vorimprägniert ist, die auf mindestens einer Seite eine Trennfolie umfasst.

5. Maschine zum Schneiden von Stoffelementen (300), umfassend eine Vorrichtung zum Zuführen (310) eines Materialstreifens (100), der eine Gewebeschicht (103) und mindestens eine Folie (101, 102), die auf einer seiner Seiten vorhanden ist, umfasst, ein Schneidsystem (330), das eine Schneidklinge (331) umfasst, die an einem motorisierten Mechanismus (332) montiert ist, der in der Lage ist, die Schneidklinge in mehreren Richtungen in dem Materialstreifen zu bewegen, und eine Steuereinheit (340), die mit dem motorisierten Mechanismus verbunden ist, um die Bewegungen der Schneidklinge in dem Materialstreifen (100) gemäß einer bestimmten Schneidkontur (221), die mindestens einen Winkel umfasst, zu steuern, **dadurch gekennzeichnet, dass** die Steuereinheit (340) dazu ausgebildet ist, das Schneiden des Materialstreifens (10) gemäß einer Rundung (AR5-AR10) an jedem Winkel der Kontur zu steuern, um ein Stoffelement (220) ohne Überschneidung zu erhalten, wobei die Überschneidungen potentielle Ansätze von Rissen der mindestens einen Folie beim Abziehen von der Gewebeschicht sind, wobei die Risse die Ablagerung von Folienstücken auf der Gewebeschicht, die in dem Stoffelement vorhanden ist, mit sich führen.

6. Maschine nach Anspruch 5, wobei jede Rundung (AR5) einen Krümmungsradius (R5) größer oder gleich 1,2 mm aufweist.

7. Maschine nach Anspruch 5 oder 6, wobei jede Rundung (AR5) einen Krümmungsradius (R5) kleiner oder gleich 3 mm aufweist.

8. Maschine nach einem der Ansprüche 5 bis 7, wobei die Gewebeschicht (103) eine Faserschicht ist, die mit einem Harz vorimprägniert ist, die auf mindestens einer Seite eine Trennfolie umfasst.

## Claims

1. A method of cutting one or more draping elements (220)
in a strip of material (100) comprising a fabric layer (103) comprising a film (101, 102) on at least one face, each draping element being delimited along a determined outline (221) comprising at least one angle, each draping element being cut by means of a cutting blade (331),
**characterized in that**, at each angle of the outline, the fabric layer (103) and said at least one film (101, 102) are cut along a curve (AR5-AR10) so as to obtain one or more draping elements (220) without overcutting, overcutting being potential initiators of tears in said at least one film as it peels away from the fabric layer, the tears causing pieces of film to be deposited on the fabric layer in the draping element(s).

2. The method according to claim 1, wherein each curve (R5) has a radius of curvature (R5) greater than or equal to 1.2 mm.

3. The method according to claim 1 or 2, wherein each curve (A5) has a radius of curvature (R5) less than or equal to 3 mm.

4. The method according to any one of claims 1 to 3, wherein the fabric layer (103) is a layer of fibers pre-impregnated with a resin comprising on at least one face a separator film.

5. A machine for cutting draping elements (300) comprising a device (310) for feeding a strip of material (100) comprising a fabric layer (103) and at least one film (101, 102) present on one of its faces, a cutting system (330) comprising a cutting blade (331) mounted on a motorized mechanism (332) adapted to move the cutting blade in several directions in the strip of material and a control unit (340) connected to the motorized mechanism so as to control the movements of the cutting blade in the strip of material (100) along a determined cutting outline (221) comprising at least one angle, **characterized in that** the control unit (340) is configured to control the cutting of the strip of material (10) along a curve (ARS-Ar10) at each angle of the outline so as to obtain a draping element (220) without overcutting, overcutting being potential initiators of tears in said at least one film as it peels away from the fabric layer, the tears causing pieces of film to be deposited on the fabric layer in the draping element(s).

6. The machine according to claim 5, wherein each curve (AR5) has a radius of curvature (R5) greater than or equal to 1.2 mm

7. The machine according to claim 5 or 6, wherein each curve (AR5) has a radius of curvature (R5) less than or equal to 3 mm.

8. The machine according to any of claims 5 to 7, wherein the fabric layer (103) is a layer of fibers pre-impregnated with a resin comprising on at least one face a separator film.
